# EUROPEAN PATENT APPLICATION

(11) **EP 2 627 109 A1**
(43) Date of publication of application: **14.08.2013**
(21) Application number: 12155213.7
(22) Date of filing: 13.02.2012
(51) Int. Cl.: H04W 8/18

(54) **Roaming technologies for mobile internet communication**

(71) Applicant: Capernow Telemanagement Systems A/S, 1263 København (DK)
(72) Inventor: Engholm, Steen, 2920 Charlottenlund (DK); Brønnum, Christian, 2920 Charlottenlund (DK)
(74) Representative: Nielsen, Henrik Sten

(57) **Abstract**

A method of providing a mobile internet connection for a router. The method comprises providing the router, which router comprises a first cellular modem operating with a first SIM-card, a second cellular modem adapted to operate with a virtual SIM-card and a wire or wireless interface for communicating data to and from the internet via the second cellular modem.

## Description

The present invention generally relates to mobile internet connections and SIM-based roaming. More specifically, the present invention relates to the selecting of a specific cellular network provider for an internet connection when leaving the area of the cellular home network.

### RELATED TECHNOLOGY

The prior art encompasses the technologies disclosed in WO 2006/094564, EP 1350405, EP 1832093,US 7,831,249, WO 2011/139795, EP 1832093, and WO 2011/161354. Reference is made to the above documents and the above US patent is hereby incorporated by reference.

It is possible to pay a flat-rate subscription for a mobile internet connection in most countries. The subscription is normally paid to a cellular-network provider or operator monthly. Mobile access to the internet for a personal computer or the like is commonly provided with a wireless router. As the situation is today, expensive roaming fees have to be paid when roaming in a different region or country. Further, it is also very hard for a customer or end-user to estimate the cost of the roaming. It is possible to overcome these problems by buying a local subscription for mobile internet communication, but this is often a difficult process. Most foreign retailers require that you have a local address in order to buy a data subscription. Further, the registration and initialization of the local subscription may take some time before access is granted to the local cellular network for mobile internet communication.

It is an object of the present invention to establish a mobile internet connection with a cellular network operator that is predetermined for a specific country when roaming. It is a further object of the present invention to minimize the amount of data transferred in a cellular network of a non predetermined operator when establish the mobile internet connection. It is yet another object of the present invention to reduce the time for granting access to a cellular network for internet communication when roaming. It is a further object of the present invention to make roaming costs predictable for mobile internet communication.

### DESCRIPTION

The objects of the present invention are according to a first aspect achieved by a method of providing a mobile internet connection for a router, the method comprising: providing the router, the router comprising a first cellular modem operating with a first SIM-card for establishing a first cellular internet connection, a second cellular modem adapted to operate with a virtual SIM-card for establishing a second cellular internet connection, and a wire or wireless interface for communicating data to and from the internet via the second cellular modem and the second cellular internet connection, the method comprising: providing a SIM-card management system connected to the internet and comprising a plurality of SIM-cards, operating the first cellular modem to establish the first cellular internet connection, determining the cellular network of the first cellular internet connection and the country of the cellular network, the cellular network and the country uniquely defining an initial operator, sending information identifying the first SIM-card, the country of the initial operator, and optionally the cellular network of the initial operator via the first cellular internet connection to the SIM-card management system, the SIM-card management system selecting a second SIM-card of a final operator from the plurality of SIM-cards on the basis of the information identifying the first SIM-card, the country of the initial operator, and optionally the cellular network of the initial operator, transmitting information representing the second SIM-card from the SIM-card management system via the first cellular internet connection to the first cellular modem, generating the virtual SIM-card from the information representing the second SIM-card, loading the virtual SIM-card into the second cellular modem, operating the second cellular modem to establish a second cellular internet connection provided by the final operator, and terminating the first cellular internet connection subsequent to the first cellular modem receiving the information representing the second SIM-card.

The objects of the present invention are according to a second aspect achieved by a method of providing a mobile internet connection for a router, the method comprising: providing a mobile communication unit comprising a first cellular modem operating with a first SIM-card for establishing a first cellular internet connection providing the router, the router comprising: a second cellular modem adapted to operate with a virtual SIM-card for establishing a second cellular internet connection, and a wire or wireless interface for communicating data to and from the internet via the second cellular modem and the second cellular internet connection, the method comprising: establishing a temporary communication link between the mobile communication unit and the router, providing a SIM-card management system connected to the internet and comprising a plurality of SIM-cards, operating the first cellular modem to establish the first cellular internet connection, determining the cellular network of the first cellular internet connection and the country of the cellular network, the cellular network and the country uniquely defining an initial operator, sending information identifying the first SIM-card, the country of the initial operator, and optionally the cellular network of the initial operator via the first cellular internet connection to the SIM-card management system, the SIM-card management system selecting a second SIM-card of a final operator from the plurality of SIM-cards on the basis of the information identifying the first SIM-card, the country of the initial operator, and optionally the cellular network of the initial operator, transmitting information representing the second SIM-card from the SIM-card management system via the first cellular internet connection to the mobile communication unit, and from the mobile communication unit via the temporary communication link to the router, generating the virtual SIM-card from the information representing the second SIM-card, loading the virtual SIM-card into the second cellular modem, operating the second cellular modem to establish a second cellular internet connection provided by the final operator, and terminating the temporary communication link between the mobile communication unit and the router subsequent to the router receiving the information representing the second SIM-card.

The first cellular modem and the second cellular modem according to the first aspect of the present invention may share a common cellular antenna for establishing the first cellular internet connection and the second cellular internet connection, respectively, or alternatively, the first cellular modem may comprise a first cellular antenna for establishing the first cellular internet connection and the second cellular modem may comprise a second cellular antenna for establishing the second cellular internet connection.

The router according to the first and the second aspects of the present invention may be an integrated part of a mobile or stationary personal computer.

The router according to the first and second aspects of the present invention may further comprise a power supply for powering the second cellular modem. Alternatively, the router according to the first aspect of the present invention may further comprise a power supply for powering the first cellular modem and the second cellular modem.

The method according to the first aspect of the present invention may further comprise subsequent to terminating the first cellular internet connection: registering the amount of data transfer through the second cellular internet connection and reporting the registered amount of data transfer to the SIM-card management system via the second cellular internet connection.

The method according to the second aspect of the present invention may further comprise subsequent to terminating the temporary communication link between the mobile communication unit and the router: registering the amount of data transfer through the second cellular internet connection and reporting the registered amount of data transfer to the SIM-card management system via the second cellular internet connection.

The objects of the present invention are according to a third aspect achieved by a system for providing a mobile internet connection, the system comprising: a router comprising a first cellular modem operating with a first SIM-card for establishing a first cellular internet connection, a second cellular modem adapted to operate with a virtual SIM-card for establishing a second cellular internet connection, and a wire or wireless interface for communicating data to and from the internet via the second cellular modem and the second cellular internet connection, a SIM-card management system connected to the internet and comprising a plurality of SIM-cards, the router further being adapted for: operating the first cellular modem to establish the first cellular internet connection, determining the cellular network of the first cellular internet connection and the country of the cellular network, the cellular network and the country uniquely defining an initial operator and sending information identifying the first SIM-card, the country of the initial operator, and optionally the cellular network of the initial operator via the first cellular internet connection to the SIM-card management system, the SIM-card management system further being adapted for: selecting a second SIM-card of a final operator from the plurality of SIM-cards on the basis of the information identifying the first SIM-card, the country of the initial operator, and optionally the cellular network of the initial operator, and transmitting information representing the second SIM-card from the SIM-card management system via the first cellular internet connection to the first cellular modem, the router further being adapted for: generating the virtual SIM-card from the information representing the second SIM-card, loading the virtual SIM-card into the second cellular modem, operating the second cellular modem to establish a second cellular internet connection provided by the final operator, and terminating the first cellular internet connection subsequent to the first cellular modem receiving the information representing the second SIM-card.

The objects of the present invention are according to a fourth aspect achieved by a system for providing a mobile internet connection, the system comprising: a mobile communication unit comprising a first cellular modem operating with a first SIM-card for establishing a first cellular internet connection, a router comprising: a second cellular modem adapted to operate with a virtual SIM-card for establishing a second cellular internet connection, and a wire or wireless interface for communicating data to and from the internet via the second cellular modem and the second cellular internet connection, a temporary communication link between the mobile communication unit and the router, a SIM-card management system connected to the internet and comprising a plurality of SIM-cards, the router further being adapted for: operating the first cellular modem to establish the first cellular internet connection, determining the cellular network of the first cellular internet connection and the country of the cellular network, the cellular network and the country uniquely defining an initial operator, and sending information identifying the first SIM-card, the country of the initial operator, and optionally the cellular network of the initial operator via the first cellular internet connection to the SIM-card management system, the SIM-card management system further being adapted for: selecting a second SIM-card of a final operator from the plurality of SIM-cards on the basis of the information identifying the first SIM-card, the country of the initial operator, and optionally the cellular network of the initial operator, and transmitting information representing the second SIM-card from the SIM-card management system via the first cellular internet connection to the mobile communication unit, and from the mobile communication unit via the temporary communication link to the router, the router further being adapted for: generating the virtual SIM-card from the information representing the second SIM-card, loading the virtual SIM-card into the second cellular modem, operating the second cellular modem to establish a second cellular internet connection provided by the final operator, and the router further being adapted for: operating independently from the mobile communication unit subsequent to a termination of the temporary communication link between the mobile communication unit and the router.

The first cellular modem and the second cellular modem according to the third aspect of the present invention may share a common cellular antenna for establishing the first cellular internet connection and the second cellular internet connection, respectively, or alternatively, the first cellular modem may comprise a first cellular antenna for establishing the first cellular internet connection and the second cellular modem may comprise a second cellular antenna for establishing the second cellular internet connection.

The router according to the first and the second aspects of the present invention may be an integrated part of a mobile or stationary personal computer.

The router according to the third and fourth second aspects of the present invention may further comprise a power supply for powering the second cellular modem. Alternatively, the router according to the third aspect of the present invention may further comprise a power supply for powering the first cellular modem and the second cellular modem.

The router according to the third aspect of the present invention may further be adapted to, subsequent to terminating the first cellular internet connection: registering the amount of data transfer through the second cellular internet connection, and reporting the registered amount of data transfer to the SIM-card management system via the second cellular internet connection.

The router according to the fourth aspect of the present invention may further be adapted to, subsequent to a termination of the temporary communication link between the mobile communication unit and the router: registering the amount of data transfer through the second cellular internet connection and reporting the registered amount of data transfer to the SIM-card management system via the second cellular internet connection.

The objects of the present invention are according to a fifth aspect achieved by a router for providing a mobile internet connection, the router comprising: a first cellular modem operating with a first SIM-card for establishing a first cellular internet connection, a second cellular modem adapted to operate with a virtual SIM-card for establishing a second cellular internet connection, a wire or wireless interface for communicating data to and from the internet via the second cellular modem and the second cellular internet connection, and a control unit adapted for: operating the first cellular modem to establish the first cellular internet connection, determining the cellular network of the first cellular internet connection and the country of the cellular network, the cellular network and the country uniquely defining an initial operator, and sending information identifying the first SIM-card, the country of the initial operator, and optionally the cellular network of the initial operator via the first cellular internet connection to a SIM-card management system adapted for: selecting a second SIM-card of a final operator from a plurality of SIM-cards on the basis of the information identifying the first SIM-card, the country of the initial operator, and optionally the cellular network of the initial operator, and transmitting information representing the second SIM-card from the SIM-card management system via the first cellular internet connection to the first cellular modem, the control unit further being adapted for: generating the virtual SIM-card from the information representing the second SIM-card, loading the virtual SIM-card into the second cellular modem, operating the second cellular modem to establish a second cellular internet connection provided by the final operator, and terminating the first cellular internet connection subsequent to the first cellular modem receiving the information representing the second SIM-card.

The objects of the present invention are according to a sixth aspect achieved by a router for providing a mobile internet connection, the router being adapted for establishing a temporary communication link to a mobile communication unit comprising a first cellular modem operating with a first SIM-card for establishing a first cellular internet connection, the router comprising: a second cellular modem adapted to operate with a virtual SIM-card for establishing a second cellular internet connection, a wire or wireless interface for communicating data to and from the internet via the second cellular modem and the second cellular internet connection, and a control unit, the mobile communication unit further being adapted for: establishing a temporary communication link between the mobile communication unit and the router, operating the first cellular modem to establish the first cellular internet connection, determining the cellular network of the first cellular internet connection and the country of the cellular network, the cellular network and the country uniquely defining an initial operator, sending information identifying the first SIM-card, the country of the initial operator, and optionally the cellular network of the initial operator via the first cellular internet connection to a SIM-card management system adapted for selecting a second SIM-card of a final operator from a plurality of SIM-cards on the basis of the information identifying the first SIM-card, the country of the initial operator, and optionally the cellular network of the initial operator, and transmitting information representing the second SIM-card from the SIM-card management system via the first cellular internet connection to the mobile communication unit, and from the mobile communication unit via the temporary communication link to the router, the control unit further being adapted for: generating the virtual SIM-card from the information representing the second SIM-card, loading the virtual SIM-card into the second cellular modem, operating the second cellular modem to establish a second cellular internet connection provided by the final operator, and operating the router independently from the mobile communication unit subsequent to a termination of the temporary communication link between the mobile communication unit and the router.

The first cellular modem and the second cellular modem according to the fifth aspect of the present invention may share a common cellular antenna for establishing the first cellular internet connection and the second cellular internet connection, respectively, or alternatively, the first cellular modem may comprise a first cellular antenna for establishing the first cellular internet connection and the second cellular modem comprising a second cellular antenna for establishing the second cellular internet connection.

The router according to the fifth and sixth aspects of the present invention may further be adapted to be integrated with a mobile or stationary personal computer.

The router according to the fifth and sixth aspects of the present invention may further comprise a power supply for powering the second cellular modem and the control unit. Alternatively, the router according to the fifth and sixth aspects of the present invention may further comprise a housing for accommodating the second cellular modem and the control unit.

The housing of the router according to the fifth and sixth aspects of the present invention may further house or accommodate the power supply.

The router according to the fifth aspect of the present invention may further comprise a power supply for powering the first cellular modem, the second cellular modem, and the control unit.

The router according to the fifth aspect of the present invention may further comprise a housing for accommodating the first cellular modem, the second cellular modem, and the control unit.

The housing of the router according to the fifth aspect of the present invention may further be adapted for housing the power supply.

The router according to the fifth aspect of the present invention may further be adapted for being used in the method according to the first aspect of the present invention, and/or in the system according to the third aspect of the present invention.

The router according to the sixth aspect of the present invention may further be adapted for being used in the method according to the second aspect of the present invention, and/or in the system according to the fourth aspect of the present invention.

The control unit according to the fifth aspect of the present invention may further be adapted to, subsequent to terminating the first cellular internet connection: registering the amount of data transfer through the second cellular internet connection, and reporting the registered amount of data transfer to the SIM-card management system via the second cellular internet connection.

The control unit according to the sixth aspect of the present invention may further be adapted to, subsequent to a termination of the temporary communication link between the mobile communication unit and the router: registering the amount of data transfer through the second cellular internet connection, and reporting the registered amount of data transfer to the SIM-card management system via the second cellular internet connection.

The objects of the present invention are according to a seventh aspect achieved by a router for being used in the method according to the first aspect of the present invention, and/or in the system according to the third aspect of the present invention. The router according to the seventh aspect of the present invention may further comprise any of the features of the router according to the fifth aspect of the present invention.

The objects of the present invention are according to an eighth aspect achieved by a router for being used in the method according to the second aspect of the present invention, and/or in the system according to the fourth aspect of the present invention. The router according to the eighth aspect of the present invention may further comprise any of the features of the router according to the sixth aspect of the present invention.

The objects of the present invention are according to a ninth aspect achieved by a motor vehicle comprising an integrated router according to a router of any of the previous aspects of the present invention. The motor vehicle may be a motorcycle, a car, a buss, or a truck. The router may be mounted inside the motorised vehicle, preferably at or behind a protective panel, such as an instrument panel. Preferably, the router is a router according to the sixth or eighth aspect of the present invention. The router may further comprise a temporary interface for allowing a driver and/or passenger of the motor vehicle to establish the temporary communication link between the mobile communication unit and the router with a wired or wireless communication link. The motor vehicle may comprise a computer or micro computer accessing the wire or wireless interface for communicating data to and from the internet via the second cellular modem and the second cellular internet connection.

Below follow alternative or additional specifications of the aspects of the present invention.

A SIM-card is here understood to correspond to a subscriber identity/identification module comprising an integrated circuit that securely stores a subscribers identity, i.e. data corresponding to an International Mobile Subscriber Identity (IMSI) and a related key used to identify and authenticate a subscriber on a mobile device communication, such as a cellular phone. The SIM-card may or may not encompass a backing card for supporting the integrated circuitry. The integrated circuitry may encompass a Universal Integrated Circuit Card (UICC), or a smart card A virtual SIM-card is here understood to correspond to an emulation of a SIM-card in a micro-computer or the like.

A cellular internet connection is here understood to encompass an internet connection implementing the GSM standard, i.e. an internet connection via a second generation (2G) digital cellular networks implementing General Packet Radio Services (GPRS), or an internet connection via a third generation (3G) digital cellular network implementing Universal Mobile Telecommunications System (UMTS).

The wire interface may be an interface employing a wired communication technology, such as twisted pair wires, coaxial cable, ITU-T G.hn, optical fiber, USB standard connectors and cables, ethernet technologies, or an internal or external bus technology in an electronic or computer system, such as Serial ATA, PCI Express, and Firewire. The wire interface may be adapted to allow a plurality of external electronic devices to access the router.

The wireless interface may be an interface employing a wireless communication technology, such as Wi-Fi, wlan, wireless USB, Bluetooth, IrDA, Z-Wave, ZigBee, or Body Area Network. The wireless interface may be a wireless router, such as a Wi-Fi router. The wireless interface may be a personal area network and/or be adapted to allow a plurality of external electronic devices to access the router. The wireless interface may require a password or the like to allow access.

A SIM-card management may be a server coupled to one or more arrays of physical SIM-cards giving access to the plurality of SIM-cards. The SIM-cards may be from one or more cellular network operators from one or more countries.

The information identifying the first SIM-card is or may be derived from an authentication key assigned in a personalization process of the first SIM-card to a user. The SIM-card management system may store a copy of the authentication key. The selecting of the second SIM-card may comprise validating the information identifying the first SIM-card with the copy of the authentication key.

The information identifying the first SIM-card may be a Mobile Subscription Identification Number (MSIN), the information identifying the country may be a Mobile Network Code (MNC), and the information identifying the initial cellular operator may be a Mobile Country Code (MCC). The three pieces of information may be sent together as an International Mobile Subscriber Identity (IMSI).

The first SIM-card may be locked to the first cellular modem for preventing the first SIM-card to be disconnected from the first cellular modem.

The temporary communication link may be based on USB technology utilizing a USB cable that can be disconnected from the router and/or the mobile communication unit. Alternatively, the temporary communication link may be based on another wired technology, or a wireless communication technology, such as Bluetooth.

The power supply may provide power for the router only. The control unit may comprise a micro computer dedicated to control only the components of the router. The mobile personal computer may be a portable lap-top computer or a tablet computer. The stationary personal computer may be a desk-top computer. The initial operator and the final operator may be the same. The second SIM-card may be coupled to a flat-rate service for data transfer in the identified country.

Transfer of data via the wire or wireless interface may be password protected. The password may be generated in cooperation with the operator of the SIM-card management system.

A code uniquely identifying the router may be provided on the housing.

The second SIM-card may be connected to a flat-rate subscription for mobile internet communication provided by the final operator. The flat-rate subscription may allow a certain amount of data, e.g. 10 Gigabyte, to be transmitted for a specific interval of time, e.g. one month, at a fixed cost. Additionally or alternatively, the flat-rate subscription may allow an unlimited amount of data to be transmitted for a specific interval of time, e.g. five hours or one month, at a fixed cost.

The router may be an integrated part of a motor vehicle. The vehicle may be a motorcycle, a car, a buss, or a truck. The motor vehicle may comprise a computer or micro computer accessing the wire or wireless interface for communicating data to and from the internet via the second cellular modem and the second cellular internet connection.

The selecting of a second SIM-card of a final operator from the plurality of SIM-cards on the basis of the information identifying the first SIM-card, the country of the initial operator, and optionally the cellular network of the initial operator, contribute to establish a mobile internet connection with a pre-determined cellular network operator when roaming. The final operator may be a provider of a cellular internet communication in the country of the initial operator. The information identifying the first SIM-card may be used to identify a subscriber to a service offering the second SIM-card.

The terminating of the first cellular internet connection subsequent to the first cellular modem receiving the information representing the second SIM-card and the terminating the temporary communication link between the mobile communication unit and the router subsequent to the router receiving the information representing the second SIM-card have the effect that the amount of data transferred in a cellular network of a non predetermined operator is minimized.

The selecting of a second SIM-card and the generating of the virtual SIM-card and the loading of the virtual SIM-card into the second cellular modem have the effect that the time is reduced for getting access to a cellular network for internet communication when roaming.

The router of the method according to the first aspect of the present invention may be a router according to the fifth aspect of the present invention. The router of the method according to the second aspect of the present invention may be a router according to the sixth aspect of the present invention. The router of the system according to the third aspect of the present invention may be a router according to the fifth aspect of the present invention. The router of the system according to the fourth aspect of the present invention may be a router according to the sixth aspect of the present invention.

### BRIEF DESCRIPTION OF THE DRAWINGS

The above-mentioned objects, features and advantages will be further elaborated upon in the following detailed description in conjunction with the figures:
FIG. 1A schematically illustrating a preferred embodiment of a router according to the present invention,
FIG. 1B schematically illustrating an alternative embodiment of a router according to the present invention,
FIG. 2 schematically illustrating a preferred embodiment and an alternative embodiment of a system for providing a mobile internet connection according to the present invention,
FIG. 3 schematically illustrating a customer sign up process according to the present invention,
FIG. 4 schematically illustrating an activation of a router according to the present invention,
FIG. 5 schematically illustrating a method for providing a mobile internet connection according to the present invention, and
FIG. 6 schematically illustrating a router described in relation to FIG. 1B installed behind the control panel at the driver's seat in an automobile.

### DETAILED DESCRIPTION

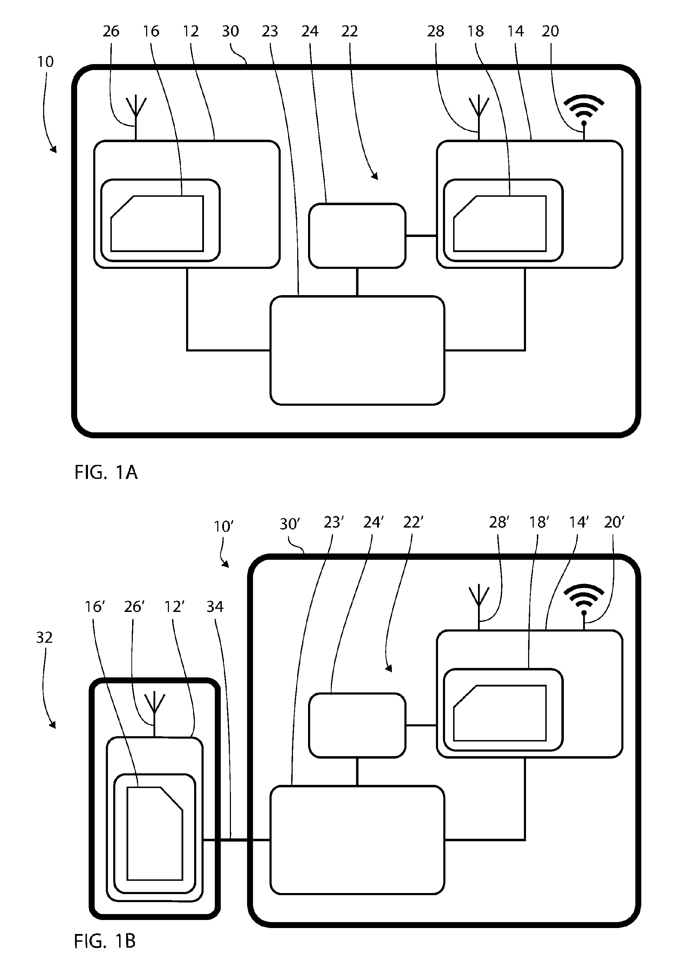

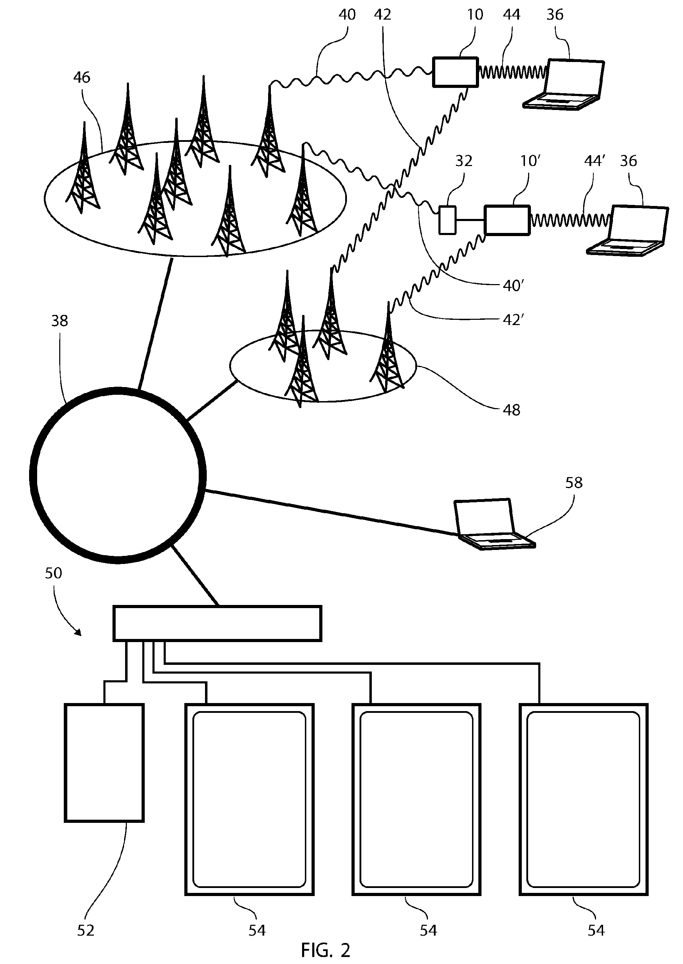

A preferred embodiment of a router 10 according to the present invention is illustrated in FIG. 1A. The router 10 has a first cellular modem 12 into which a first SIM-card 16 is inserted and a second cellular modem 14 that can operate with a virtual SIM-card 18. The router 10' further has a control unit 22 comprising a micro computer 23 coupled to the first cellular modem 12 and the second cellular modem 14. The control unit 22 also comprises a virtual SIM-card generator 24 coupled to the micro computer 23 and the second cellular modem 14. The router 10' has a wire-less interface 20 in the form of a Wi-Fi router. The router 10 also has a housing 30 accommodating all of the other components of the router10. The functions of the different components are further discussed in relation to FIGS. 2 to 5. A code uniquely identifying the router 10 is printed on the housing 30.

An alternative embodiment of a router 10' according to the present invention is illustrated in FIG. 1B. Features in common with the preferred embodiment, or related to features in the preferred embodiment, have been given the same number indexing as in FIG. 1A, but with a priming to distinguish the different embodiments.

A mobile communication device 32 has a first cellular modem 12' into which a first SIM-card 16' is inserted. The mobile communication device 32 is connected with the router 10' via a temporary wired communication link 34, preferably based on USB technology. The router 10' has a second cellular modem 14' that can operate with a virtual SIM-card 18'. The router 10' further has a control unit 22' comprising a micro computer 23' coupled to the first cellular modem 12 via the temporary wired communication link 34. The micro computer 23' is also coupled to the second cellular modem 14' and further comprises a virtual SIM-card generator 24' coupled to the micro computer 23' and the second cellular modem 14'. The router has a wire-less interface 20' in the form of a Wi-Fi router. The router 10' also has a housing 30' accommodating all of the other components of the router 10', but none of the components of the mobile communication unit 23. A code uniquely identifying the router 10' is printed on the housing 30'.

A preferred embodiment and an alternative embodiment of a system for providing a mobile internet connection according to the present invention are illustrated in FIG. 2. In the preferred embodiment, a personal computer establishes a mobile internet connection with a router 10 as described in FIG. 1A, while in the alternative embodiment, the mobile internet connection is established with a router 10 and a mobile communication unit 32 as described in FIG. 1B. The mobile internet connection is utilized by a personal computer 36, or the like, communicating with the router 10, 10' via a wire-less connection 44, 44' based on Wi-Fi technology.

In the preferred embodiment, the first cellular modem 12 of the router 10 establishes a first cellular internet connection 40 via an initial operator 46. In the alternative embodiment, the first cellular modem of the mobile communication unit 32 establishes a first cellular internet connection 40' via the initial operator 46. The initial operator is connected to the internet 38.

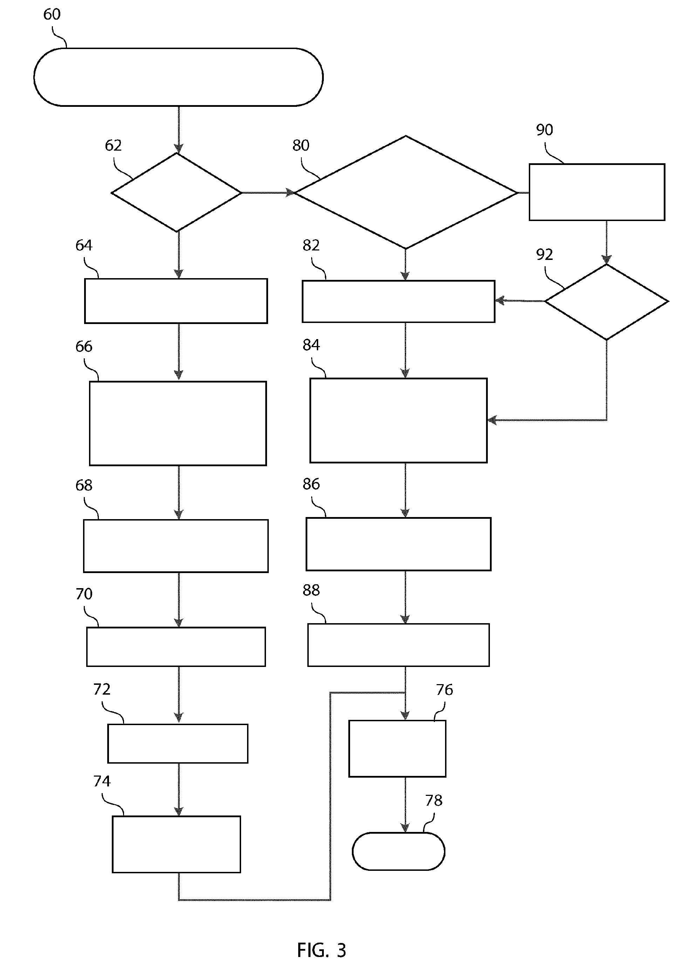

In both of the embodiments, the router 10, 10' establishes a second cellular internet connection 42, 42' via a final operator. A SIM-card management system 50 is coupled to the internet 38. The SIM-card management system 50 has a customer management system 52 (iTMS) and a plurality of SIM-servers 54, each having a plurality of arrays holding physical SIM-cards. The customer management system 52 (iTMS) is coupled to the SIM-servers 54 and the internet 38 via a communication hub 56. A customer contacts the customer management system 52 via the internet 38, e.g. by using a personal computer or the like, e.g. for establishing a subscription to the services provided by the operator of the SIM-card management system 50. The functions of the different components of the system are further discussed in relation to FIGS. 3 to 5.

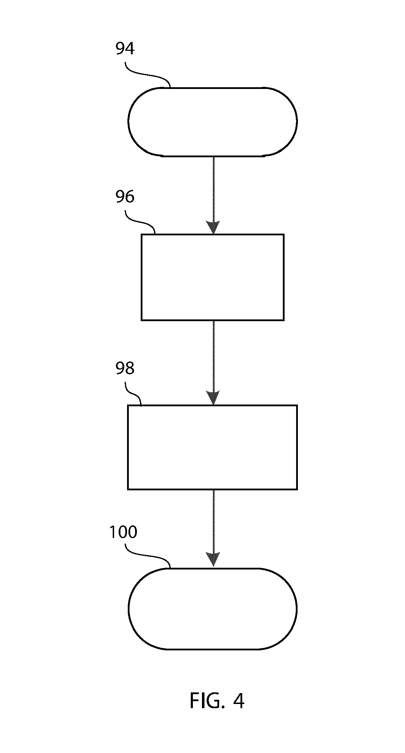

A preferred customer sign-up process according to the present invention is illustrated in the flow-chart in FIG. 3. In the first step 60, a customer contacts the SIM-card management system 50. In the next step 62, it is determined if the customer already has a router 10, 10'. If the customer does not have a router 10, 10', he is then asked in the following step 64 to provide personal contact, and/or delivery information of himself, or optionally of another end user. In the next step 66 he is asked to choose a specific subscription from a range of subscriptions having different subscription periods. In the next step 68 payment for the services and/or a router is enacted. An activation email is sent to the customer in the subsequent step 70. In the next step 72, the router 10, 10' is sent to the customer, or optionally to the end user if different. If the end user is different from the customer, the activation email is instead or also sent to the end user 74. Subsequently, an activation of the router 10, 10' is performed 76 by the end user. This activation is further described in relation to FIG. 4. Following the activation of the router 10, 10', the customer sign-up process is finished 78.

In the step 62, if it is determined that the customer already has a router 10, 10', it is then determined in the subsequent step 80 if he is an existing or a new customer. If he is a new customer, he is in the next step 82 asked to provide personal and contact information of himself. In the next step 84, he is asked to choose a specific subscription from a range of subscriptions having different subscription periods. In the next step 86, payment for the services and/or a router is enacted. An activation email is sent to the customer in the subsequent step 88. Subsequently, an activation of the router 10, 10' is performed 76 by the end user. This activation is further described in relation to FIG. 4. Following the activation of the router 10, 10', the customer sign-up process is finished 78.

In the step 80, if it is determined that the customer is an existing customer, he is in the subsequent step 90 asked to provide his contact information, such as an email address, and the code printed on the housing 30, 30' of router 10, 10'. The, information is checked in the following step 92, and if it is determined that the customer is unknown, the signup process continues to step 82 above, otherwise the signup process continues to step 84 above.

A preferred activation process according to the present invention is illustrated in the flow-chart in FIG. 4. First, a customer sign-up process 94 is performed as described in relation to FIG. 3. In the subsequent step 96, the customer or end user activates an URL in the activation email to start an activation page from the SIM-card management system 50 via a personal computer 58, or the like, and the internet 38. In the next step 98, the customer or end user inserts the code printed on the housing 30, 30' of the router 10, 10' in the activation page. After this the router 10, 10' is ready 100 for use.

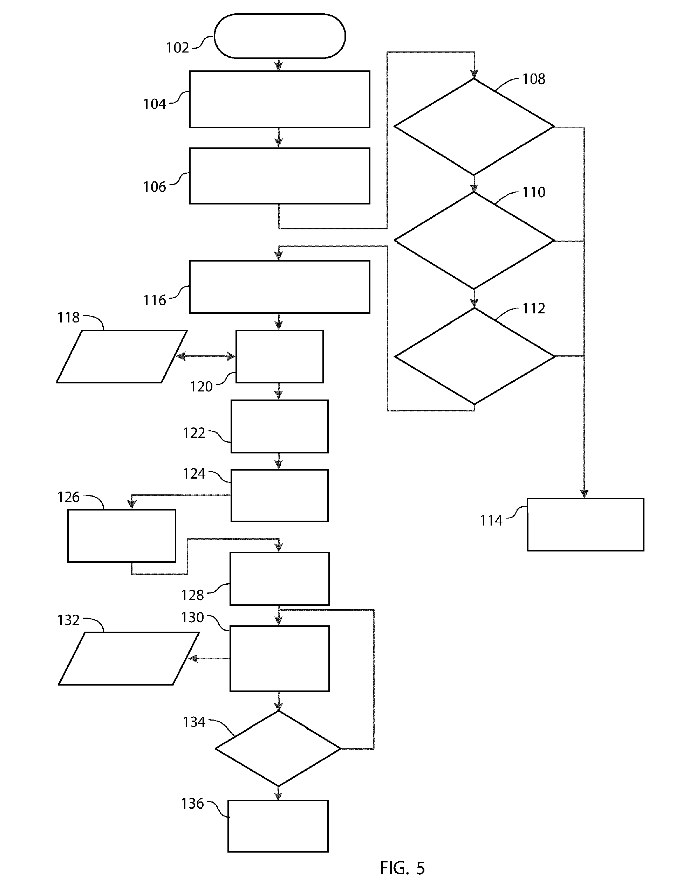

A method for providing a mobile internet connection according to the present invention is illustrated in the flow chart shown in FIG. 5. In the first step 102, the user turns on the router 10,10'. In the next step 104, the first cellular modem 12,12' contacts the cellular data network of an initial operator 46 and establishes a first cellular internet connection 40, 40' with the first SIM-card 16, 16'. Information identifying the network and country of the initial operator 46 is determined. This information together with information identifying the first SIM-card 16, 16' is sent to the SIM-card management system 50 in the subsequent step 106. In the next step 108, the information representing the first SIM-card 16, 16' is used by the customer management system 52 to determine if the first SIM-card 16 belongs to a customer or end user. If the first SIM-card 16 is determined not to belong to a customer, then the SIM-card management system 50 acts in the next step 114 to disconnect the first SIM-card. If the first SIM-card 16 is determined to belong to a customer or end user, then the next step 110 is to determine if the customer or end user has a valid subscription. If no valid subscription can be identified, then the SIM-card management system 50 acts in the next step 114 to disconnect the first SIM-card. If the customer or end user is determined to have a valid subscription, then the next step 112 is to determine if the customer or end user has a positive balance on the subscription account. If there is no positive balance on the subscription account, then the SIM-card management system 50 acts in the next step 114 to disconnect the first SIM-card. If there is a positive balance on the subscription account, then in the next step 116, the SIM-card management system 52 searches 118 the SIM-servers 54 for the oldest available and valid second SIM-card of a final operator 48 in the same country as the initial operator 46. In the subsequent step 120, information representing the second SIM-card is sent to the first cellular modem 12, 12' via the internet 38 and the first cellular internet connection 40, 40'. In the next step, the SIM-card management system 52 resets the amount of data sent by the second cellular modem 14. The virtual SIM-card generator 24 of the control unit 22, 22' generates a virtual SIM-card 18, 18' from the data representing the second SIM-card. The virtual SIM card is loaded into the second cellular modem, which establishes a second cellular internet connection 42, 42' provided by the final operator 48. In the next step 126, the micro computer 23, 23' changes the internet route from the first cellular modem 12, 12' to the second cellular modem 14, 14'. The first cellular modem 12, 12' is disconnected in the subsequent step 128. At this stage, the personal computer 36, or the like, is connected the router 10, 10' via the wire-less connection 44, 44', to establish the mobile internet connection.

The micro computer 23, 23' continually registers 130 the amount of data transferred by the second cellular modem 14, 14' and continually reports 132 the amount of transferred to the SIM-card management system 50. The SIM-card management system 50 controls 134 if the total amount of data sent exceeds a limit, e.g. 10 Gigabyte. If the total amount of data sent exceeds the limit, then the virtual SIM-card is disconnected 136. In an alternative embodiment, the micro computer 23, 23' continually registers 130 times the second cellular modem 14, 14' has been connected to the internet and continually reports 132 the time to the SIM-card management system 50. The SIM-card management system 50 controls 134 if the total time exceeds a limit, e.g. 5 hours. If the total time exceeds the limit, then the virtual SIM-card is disconnected 136.

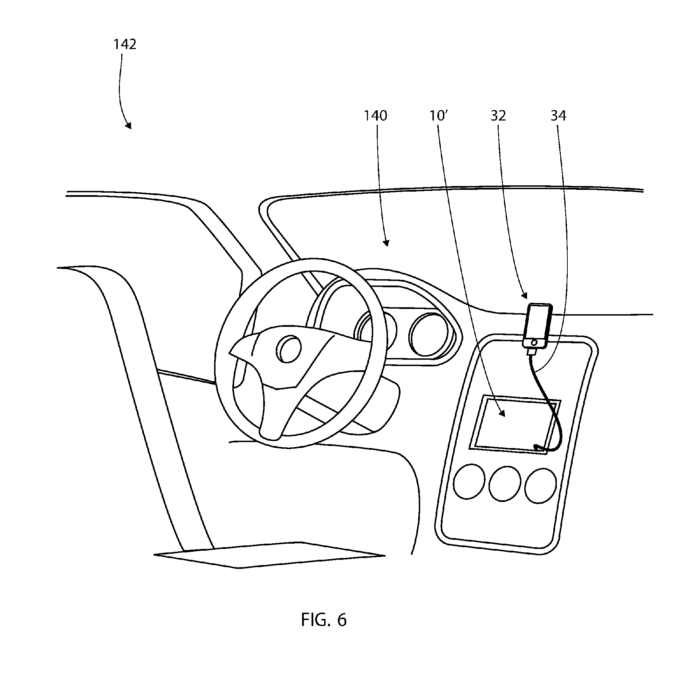

FIG. 6 schematically illustrates the router 10' described in relation to FIG. 1B installed behind the instrument panel 140 at the driver's seat in an automobile 142. The router 10' is integrated with the vehicle 142 . The router 10' further comprises a temporary interface for allowing a driver and/or passenger of the motor vehicle 142 to establish the temporary communication link 34 between the mobile communication unit 32 and the router 10' with a wired link implementing USB technology. The driver and/or the passengers can establish a mobile internet connection via the wireless interface 20' shown in FIG. 1B. The second antenna 28' is hidden behind the instrument panel 140. Additionally or alternatively, one or more integrated micro computers of the automobile may establish a mobile internet connection via the wire or wireless interface 20', e.g. for automatically reporting accidents or detected problems with the vehicle.

Points characterising the invention:
1. A method of providing a mobile internet connection for a router, said method comprising:
   providing said router, said router comprising: a first cellular modem operating with a first SIM-card for establishing a first cellular internet connection, a second cellular modem adapted to operate with a virtual SIM-card for establishing a second cellular internet connection, and a wire or wireless interface for communicating data to and from the internet via said second cellular modem and said second cellular internet connection, said method comprising:
   providing a SIM-card management system connected to the internet and comprising a plurality of SIM-cards,
   operating said first cellular modem to establish said first cellular internet connection,
   determining the cellular network of said first cellular internet connection and the country of said cellular network, said cellular network and said country uniquely defining an initial operator,
   sending information identifying said first SIM-card, said country of said initial operator, and optionally said cellular network of said initial operator via said first cellular internet connection to said SIM-card management system,
   said SIM-card management system selecting a second SIM-card of a final operator from said plurality of SIM-cards on the basis of said information identifying said first SIM-card, said country of said initial operator, and optionally said cellular network of said initial operator,
   transmitting information representing said second SIM-card from said SIM-card management system via said first cellular internet connection to said first cellular modem,
   generating said virtual SIM-card from said information representing said second SIM-card,
   loading said virtual SIM-card into said second cellular modem,
   operating said second cellular modem to establish a second cellular internet connection provided by said final operator, and
   terminating said first cellular internet connection subsequent to said first cellular modem receiving said information representing said second SIM-card.
2. A method of providing a mobile internet connection for a router, said method comprising:
   providing a mobile communication unit comprising a first cellular modem operating with a first SIM-card for establishing a first cellular internet connection
   providing said router, said router comprising: a second cellular modem adapted to operate with a virtual SIM-card for establishing a second cellular internet connection, and a wire or wireless interface for communicating data to and from the internet via said second cellular modem and said second cellular internet connection, said method comprising:
   establishing a temporary communication link between said mobile communication unit and said router,
   providing a SIM-card management system connected to the internet and comprising a plurality of SIM-cards,
   operating said first cellular modem to establish said first cellular internet connection,
   determining the cellular network of said first cellular internet connection and the country of said cellular network, said cellular network and said country uniquely defining an initial operator,
   sending information identifying said first SIM-card, said country of said initial operator, and optionally said cellular network of said initial operator via said first cellular internet connection to said SIM-card management system,
   said SIM-card management system selecting a second SIM-card of a final operator from said plurality of SIM-cards on the basis of said information identifying said first SIM-card, said country of said initial operator, and optionally said cellular network of said initial operator,
   transmitting information representing said second SIM-card from said SIM-card management system via said first cellular internet connection to said mobile communication unit, and from said mobile communication unit via said temporary communication link to said router,
   generating said virtual SIM-card from said information representing said second SIM-card,
   loading said virtual SIM-card into said second cellular modem,
   operating said second cellular modem to establish a second cellular internet connection provided by said final operator, and
   terminating said temporary communication link between said mobile communication unit and said router subsequent to said router receiving said information representing said second SIM-card.
3. The method according to point 1 characterised by said first cellular modem and said second cellular modem sharing a common cellular antenna for establishing said first cellular internet connection and said second cellular internet connection, respectively, or alternatively, said first cellular modem comprising a first cellular antenna for establishing said first cellular internet connection and said second cellular modem comprising a second cellular antenna for establishing said second cellular internet connection.
4. The method according to any of the points 1 to 3 characterised by said router being an integrated part of a mobile or stationary personal computer.
5. The method according to any of the points 1 to 4 characterised by said router further comprising a power supply for powering said second cellular modem.
6. The method according to point 1 or any of the points 3 to 4 depending on point 1, characterised by said router further comprising a power supply for powering said first cellular modem and said second cellular modem.
7. A system for providing a mobile internet connection, said system comprising:
   a router comprising: a first cellular modem operating with a first SIM-card for establishing a first cellular internet connection, a second cellular modem adapted to operate with a virtual SIM-card for establishing a second cellular internet connection, and a wire or wireless interface for communicating data to and from the internet via said second cellular modem and said second cellular internet connection,
   a SIM-card management system connected to the internet and comprising a plurality of SIM-cards,
   said router further being adapted for:
      operating said first cellular modem to establish said first cellular internet connection,
      determining the cellular network of said first cellular internet connection and the country of said cellular network, said cellular network and said country uniquely defining an initial operator, and
      sending information identifying said first SIM-card, said country of said initial operator, and optionally said cellular network of said initial operator via said first cellular internet connection to said SIM-card management system,
   said SIM-card management system further being adapted for:
      selecting a second SIM-card of a final operator from said plurality of SIM-cards on the basis of said information identifying said first SIM-card, said country of said initial operator, and optionally said cellular network of said initial operator, and
      transmitting information representing said second SIM-card from said SIM-card management system via said first cellular internet connection to said first cellular modem,
   said router further being adapted for:
      generating said virtual SIM-card from said information representing said second SIM-card,
      loading said virtual SIM-card into said second cellular modem,
      operating said second cellular modem to establish a second cellular internet connection provided by said final operator, and
      terminating said first cellular internet connection subsequent to said first cellular modem receiving said information representing said second SIM-card.
8. A system for providing a mobile internet connection, said system comprising:
   a mobile communication unit comprising: a first cellular modem operating with a first SIM-card for establishing a first cellular internet connection
   a router comprising: a second cellular modem adapted to operate with a virtual SIM-card for establishing a second cellular internet connection, and a wire or wireless interface for communicating data to and from the internet via said second cellular modem and said second cellular internet connection,
   a temporary communication link between said mobile communication unit and said router,
   a SIM-card management system connected to the internet and comprising a plurality of SIM-cards,
   said router further being adapted for:
      operating said first cellular modem to establish said first cellular internet connection,
      determining the cellular network of said first cellular internet connection and the country of said cellular network, said cellular network and said country uniquely defining an initial operator, and
      sending information identifying said first SIM-card, said country of said initial operator, and optionally said cellular network of said initial operator via said first cellular internet connection to said SIM-card management system,
   said SIM-card management system further being adapted for:
      selecting a second SIM-card of a final operator from said plurality of SIM-cards on the basis of said information identifying said first SIM-card, said country of said initial operator, and optionally said cellular network of said initial operator, and
      transmitting information representing said second SIM-card from said SIM-card management system via said first cellular internet connection to said mobile communication unit, and from said mobile communication unit via said temporary communication link to said router,
   said router further being adapted for:
      generating said virtual SIM-card from said information representing said second SIM-card,
      loading said virtual SIM-card into said second cellular modem,
      operating said second cellular modem to establish a second cellular internet connection provided by said final operator, and said router further being adapted for:
      operating independently from said mobile communication unit subsequent to a termination of said temporary communication link between said mobile communication unit and said router.
9. The system according to point 7 characterised by said first cellular modem and said second cellular modem sharing a common cellular antenna for establishing said first cellular internet connection and said second cellular internet connection, respectively, or alternatively, said first cellular modem comprising a first cellular antenna for establishing said first cellular internet connection and said second cellular modem comprising a second cellular antenna for establishing said second cellular internet connection.
10. The system according to any of the points 7 to 9 characterised by said router being an integrated part of a mobile or stationary personal computer.
11. The system according to any of the points 7 to 10 characterised by said router further comprising a power supply for powering said second cellular modem.
12. The system according to point 7 or any of the points 9 to 10 depending on point 7, characterised by said said router further comprising a power supply for powering said first cellular modem and said second cellular modem.
13. A router for providing a mobile internet connection, said router comprising:
   a first cellular modem operating with a first SIM-card for establishing a first cellular internet connection,
   a second cellular modem adapted to operate with a virtual SIM-card for establishing a second cellular internet connection,
   a wire or wireless interface for communicating data to and from the internet via said second cellular modem and said second cellular internet connection, and
   a control unit adapted for:
      operating said first cellular modem to establish said first cellular internet connection,
      determining the cellular network of said first cellular internet connection and the country of said cellular network, said cellular network and said country uniquely defining an initial operator, and
      sending information identifying said first SIM-card, said country of said initial operator, and optionally said cellular network of said initial operator via said first cellular internet connection to a SIM-card management system adapted for:
         selecting a second SIM-card of a final operator from a plurality of SIM-cards on the basis of said information identifying said first SIM-card, said country of said initial operator, and optionally said cellular network of said initial operator, and
         transmitting information representing said second SIM-card from said SIM-card management system via said first cellular internet connection to said first cellular modem,
   said control unit further being adapted for:
      generating said virtual SIM-card from said information representing said second SIM-card,
      loading said virtual SIM-card into said second cellular modem, operating said second cellular modem to establish a second cellular internet connection provided by said final operator, and
      terminating said first cellular internet connection subsequent to said first cellular modem receiving said information representing said second SIM-card.
14. A router for providing a mobile internet connection, said router being adapted for establishing a temporary communication link to a mobile communication unit comprising a first cellular modem operating with a first SIM-card for establishing a first cellular internet connection, said router comprising:
   a second cellular modem adapted to operate with a virtual SIM-card for establishing a second cellular internet connection,
   a wire or wireless interface for communicating data to and from the internet via said second cellular modem and said second cellular internet connection, and
   a control unit,
   said mobile communication unit further being adapted for:
      establishing a temporary communication link between said mobile communication unit and said router,
      operating said first cellular modem to establish said first cellular internet connection,
      determining the cellular network of said first cellular internet connection and the country of said cellular network, said cellular network and said country uniquely defining an initial operator,
      sending information identifying said first SIM-card, said country of said initial operator, and optionally said cellular network of said initial operator via said first cellular internet connection to a SIM-card management system adapted for:
         selecting a second SIM-card of a final operator from a plurality of SIM-cards on the basis of said information identifying said first SIM-card, said country of said initial operator, and optionally said cellular network of said initial operator, and
         transmitting information representing said second SIM-card from said SIM-card management system via said first cellular internet connection to said mobile communication unit, and from said mobile communication unit via said temporary communication link to said router,
   said control unit further being adapted for:
      generating said virtual SIM-card from said information representing said second SIM-card,
      loading said virtual SIM-card into said second cellular modem,
      operating said second cellular modem to establish a second cellular internet connection provided by said final operator, and
      operating said router independently from said mobile communication unit subsequent to a termination of said temporary communication link between said mobile communication unit and said router.
15. The router according to point 13 characterised by said first cellular modem and said second cellular modem sharing a common cellular antenna for establishing said first cellular internet connection and said second cellular internet connection, respectively, or alternatively, said first cellular modem comprising a first cellular antenna for establishing said first cellular internet connection and said second cellular modem comprising a second cellular antenna for establishing said second cellular internet connection.
16. The router according to any of the points 13 to 15 characterised by said router being integrated with a mobile or stationary personal computer comprising.
17. The router according to any of the points 13 to 16 characterised by said router further comprising a power supply for powering said second cellular modem and said control unit.
18. The router according to any of the points 13 to 17 characterised by said router further comprising a housing accommodating said second cellular modem and said control unit.
19. The router according to points 17 and 18 characterized by said housing further accommodating said power supply.
20. The router according to points 13, or any of the points 15 to 16 depending on point 13, characterised by said router further comprising a power supply for powering said first cellular modem, said second cellular modem, and said control unit.
21. The router according to point 13, or any of the points 15 to 20 depending on point 13 characterised by said router further comprising a housing for accommodating said first cellular modem, said second cellular modem, and said control unit.
22. The router according to points 20 and 21 characterized by said housing further accommodating said power supply.
23. The router according to point 13 or any of the points 15 to 22 depending on point 13 further being adapted for being used in the method according to point 1 or any of the points 3 to 6 depending on point 1, and/or in the system according to point 7 or any of the points 9 to 12 depending on point 7.
24. The router according to point 14 or any of the points 15 to 22 depending on point 14 further being adapted for being used in the method according to point 2 or any of the points 3 to 6 depending on point 2, and/or in the system according to point 8 or any of the points 9 to 12 depending on point 8.
25. A router for being used in the method according to point 1 or any of the points 3 to 6 depending on point 1, and/or in the system according to point 7 or any of the points 9 to 12 depending on point 7.
26. The router according to point 25 characterised by further comprising any of the features of the router according to point 13 or any of the points 15 to 22 depending on point 13.
27. A router for being used in the method according to point 2 or any of the points 3 to 6 depending on point 2, and/or in the system according to point 8 or any of the points 9 to 12 depending on point 8.
28. The router according to point 25 characterised by further comprising any of the features of the router according to point 14 or any of the points 15 to 22 depending on point 14.

### ITEM LIST

10 router
12 first cellular modem
14 second cellular modem
16 first SIM-card
18 second SIM-card
20 wireless interface
22 control unit
23 micro computer
24 virtual SIM-card generator
26 first antenna
28 second antenna
30 housing
32 mobile communication unit
34 temporary communication link
36 personal computer
38 internet
40 first cellular internet connection
42 second cellular internet connection
44 wire-less connection
46 initial operator
48 final operator
50 SIM-card management system
52 customer management system
54 SIM-server
56 communication hub
58 personal computer

## Claims

1. A method of providing a mobile internet connection for a router, said method comprising:
providing said router, said router comprising: a first cellular modem operating with a first SIM-card for establishing a first cellular internet connection, a second cellular modem adapted to operate with a virtual SIM-card for establishing a second cellular internet connection, and a wire or wireless interface for communicating data to and from the internet via said second cellular modem and said second cellular internet connection, said method comprising:
providing a SIM-card management system connected to the internet and comprising a plurality of SIM-cards,
operating said first cellular modem to establish said first cellular internet connection,
determining the cellular network of said first cellular internet connection and the country of said cellular network, said cellular network and said country uniquely defining an initial operator,
sending information identifying said first SIM-card, said country of said initial operator, and optionally said cellular network of said initial operator via said first cellular internet connection to said SIM-card management system,
said SIM-card management system selecting a second SIM-card of a final operator from said plurality of SIM-cards on the basis of said information identifying said first SIM-card, said country of said initial operator, and optionally said cellular network of said initial operator,
transmitting information representing said second SIM-card from said SIM-card management system via said first cellular internet connection to said first cellular modem,
generating said virtual SIM-card from said information representing said second SIM-card,
loading said virtual SIM-card into said second cellular modem,
operating said second cellular modem to establish a second cellular internet connection provided by said final operator, and
terminating said first cellular internet connection subsequent to said first cellular modem receiving said information representing said second SIM-card.

2. A method of providing a mobile internet connection for a router, said method comprising:
providing a mobile communication unit comprising a first cellular modem operating with a first SIM-card for establishing a first cellular internet connection
providing said router, said router comprising: a second cellular modem adapted to operate with a virtual SIM-card for establishing a second cellular internet connection, and a wire or wireless interface for communicating data to and from the internet via said second cellular modem and said second cellular internet connection, said method comprising:
establishing a temporary communication link between said mobile communication unit and said router,
providing a SIM-card management system connected to the internet and comprising a plurality of SIM-cards,
operating said first cellular modem to establish said first cellular internet connection,
determining the cellular network of said first cellular internet connection and the country of said cellular network, said cellular network and said country uniquely defining an initial operator,
sending information identifying said first SIM-card, said country of said initial operator, and optionally said cellular network of said initial operator via said first cellular internet connection to said SIM-card management system,
said SIM-card management system selecting a second SIM-card of a final operator from said plurality of SIM-cards on the basis of said information identifying said first SIM-card, said country of said initial operator, and optionally said cellular network of said initial operator,
transmitting information representing said second SIM-card from said SIM-card management system via said first cellular internet connection to said mobile communication unit, and from said mobile communication unit via said temporary communication link to said router,
generating said virtual SIM-card from said information representing said second SIM-card,
loading said virtual SIM-card into said second cellular modem,
operating said second cellular modem to establish a second cellular internet connection provided by said final operator, and
terminating said temporary communication link between said mobile communication unit and said router subsequent to said router receiving said information representing said second SIM-card.

3. A system for providing a mobile internet connection, said system comprising:
a router comprising: a first cellular modem operating with a first SIM-card for establishing a first cellular internet connection, a second cellular modem adapted to operate with a virtual SIM-card for establishing a second cellular internet connection, and a wire or wireless interface for communicating data to and from the internet via said second cellular modem and said second cellular internet connection,
a SIM-card management system connected to the internet and comprising a plurality of SIM-cards,
said router further being adapted for:
operating said first cellular modem to establish said first cellular internet connection,
determining the cellular network of said first cellular internet connection and the country of said cellular network, said cellular network and said country uniquely defining an initial operator, and
sending information identifying said first SIM-card, said country of said initial operator, and optionally said cellular network of said initial operator via said first cellular internet connection to said SIM-card management system,
said SIM-card management system further being adapted for:
selecting a second SIM-card of a final operator from said plurality of SIM-cards on the basis of said information identifying said first SIM-card, said country of said initial operator, and optionally said cellular network of said initial operator, and
transmitting information representing said second SIM-card from said SIM-card management system via said first cellular internet connection to said first cellular modem,
said router further being adapted for:
generating said virtual SIM-card from said information representing said second SIM-card,
loading said virtual SIM-card into said second cellular modem,
operating said second cellular modem to establish a second cellular internet connection provided by said final operator, and
terminating said first cellular internet connection subsequent to said first cellular modem receiving said information representing said second SIM-card.

4. A system for providing a mobile internet connection, said system comprising:
a mobile communication unit comprising: a first cellular modem operating with a first SIM-card for establishing a first cellular internet connection
a router comprising: a second cellular modem adapted to operate with a virtual SIM-card for establishing a second cellular internet connection, and a wire or wireless interface for communicating data to and from the internet via said second cellular modem and said second cellular internet connection,
a temporary communication link between said mobile communication unit and said router,
a SIM-card management system connected to the internet and comprising a plurality of SIM-cards,
said router further being adapted for:
operating said first cellular modem to establish said first cellular internet connection,
determining the cellular network of said first cellular internet connection and the country of said cellular network, said cellular network and said country uniquely defining an initial operator, and
sending information identifying said first SIM-card, said country of said initial operator, and optionally said cellular network of said initial operator via said first cellular internet connection to said SIM-card management system,
said SIM-card management system further being adapted for:
selecting a second SIM-card of a final operator from said plurality of SIM-cards on the basis of said information identifying said first SIM-card, said country of said initial operator, and optionally said cellular network of said initial operator, and
transmitting information representing said second SIM-card from said SIM-card management system via said first cellular internet connection to said mobile communication unit, and from said mobile communication unit via said temporary communication link to said router,
said router further being adapted for:
generating said virtual SIM-card from said information representing said second SIM-card,
loading said virtual SIM-card into said second cellular modem,
operating said second cellular modem to establish a second cellular internet connection provided by said final operator, and said router further being adapted for:
operating independently from said mobile communication unit subsequent to a termination of said temporary communication link between said mobile communication unit and said router.

5. A router for providing a mobile internet connection, said router comprising:
a first cellular modem operating with a first SIM-card for establishing a first cellular internet connection,
a second cellular modem adapted to operate with a virtual SIM-card for establishing a second cellular internet connection,
a wire or wireless interface for communicating data to and from the internet via said second cellular modem and said second cellular internet connection, and
a control unit adapted for:
operating said first cellular modem to establish said first cellular internet connection,
determining the cellular network of said first cellular internet connection and the country of said cellular network, said cellular network and said country uniquely defining an initial operator, and
sending information identifying said first SIM-card, said country of said initial operator, and optionally said cellular network of said initial operator via said first cellular internet connection to a SIM-card management system adapted for:
selecting a second SIM-card of a final operator from a plurality of SIM-cards on the basis of said information identifying said first SIM-card, said country of said initial operator, and optionally said cellular network of said initial operator, and
transmitting information representing said second SIM-card from said SIM-card management system via said first cellular internet connection to said first cellular modem,
said control unit further being adapted for:
generating said virtual SIM-card from said information representing said second SIM-card,
loading said virtual SIM-card into said second cellular modem,
operating said second cellular modem to establish a second cellular internet connection provided by said final operator, and
terminating said first cellular internet connection subsequent to said first cellular modem receiving said information representing said second SIM-card.

6. A router for providing a mobile internet connection, said router being adapted for establishing a temporary communication link to a mobile communication unit comprising a first cellular modem operating with a first SIM-card for establishing a first cellular internet connection, said router comprising:
a second cellular modem adapted to operate with a virtual SIM-card for establishing a second cellular internet connection,
a wire or wireless interface for communicating data to and from the internet via said second cellular modem and said second cellular internet connection, and
a control unit,
said mobile communication unit further being adapted for:
establishing a temporary communication link between said mobile communication unit and said router,
operating said first cellular modem to establish said first cellular internet connection,
determining the cellular network of said first cellular internet connection and the country of said cellular network, said cellular network and said country uniquely defining an initial operator,
sending information identifying said first SIM-card, said country of said initial operator, and optionally said cellular network of said initial operator via said first cellular internet connection to a SIM-card management system adapted for:
selecting a second SIM-card of a final operator from a plurality of SIM-cards on the basis of said information identifying said first SIM-card, said country of said initial operator, and optionally said cellular network of said initial operator, and
transmitting information representing said second SIM-card from said SIM-card management system via said first cellular internet connection to said mobile communication unit, and from said mobile communication unit via said temporary communication link to said router,
said control unit further being adapted for:
generating said virtual SIM-card from said information representing said second SIM-card,
loading said virtual SIM-card into said second cellular modem,
operating said second cellular modem to establish a second cellular internet connection provided by said final operator, and
operating said router independently from said mobile communication unit subsequent to a termination of said temporary communication link between said mobile communication unit and said router.

7. The router according to claim 5 **characterised by** said first cellular modem and said second cellular modem sharing a common cellular antenna for establishing said first cellular internet connection and said second cellular internet connection, respectively, or alternatively, said first cellular modem comprising a first cellular antenna for establishing said first cellular internet connection and said second cellular modem comprising a second cellular antenna for establishing said second cellular internet connection.

8. The router according to any of the claims 5 to 7 **characterised by** said router being integrated with a mobile or stationary personal computer comprising.

9. The router according to any of the claims 5 to 8 **characterised by** said router further comprising a power supply for powering said second cellular modem and said control unit.

10. The router according to any of the claims 5 to 9 **characterised by** said router further comprising a housing accommodating said second cellular modem and said control unit.

11. The router according to claims 9 and 10 **characterized by** said housing further accommodating said power supply.

12. The router according to claim 5, or any of the claims 7 to 11 depending on claim 5, **characterised by** said router further comprising a power supply for powering said first cellular modem, said second cellular modem, and said control unit.

13. The router according to claim 5, or any of the claims 7 to 12 depending on claim 5 **characterised by** said router further comprising a housing for accommodating said first cellular modem, said second cellular modem, and said control unit.

14. The router according to claims 12 and 13 **characterized by** said housing further accommodating said power supply.
